(19) Europäisches Patentamt
European Patent Office
Office européen des brevets

(11) **EP 3 726 425 B1**

(12) **EUROPÄISCHE PATENTSCHRIFT**

(45) Veröffentlichungstag und Bekanntmachung des Hinweises auf die Patenterteilung:
**11.10.2023 Patentblatt 2023/41**

(21) Anmeldenummer: **20170194.3**

(22) Anmeldetag: **17.04.2020**

(51) Internationale Patentklassifikation (IPC):
**G06V 20/20** (2022.01)   **G06V 20/17** (2022.01)

(52) Gemeinsame Patentklassifikation (CPC):
**G06V 20/20; G06V 20/17**

(54) **VERFAHREN ZUM PHYSIKALISCHEN, INSBESONDERE ZUM OPTISCHEN, ERFASSEN ZUMINDEST EINES NUTZUNGSOBJEKTES**

METHOD FOR PHYSICAL, IN PARTICULAR OPTICAL, DETECTION OF AT LEAST ONE APPLICATION OBJECT

PROCÉDÉ DE DÉTECTION PHYSIQUE, EN PARTICULIER OPTIQUE, D'AU MOINS UN OBJET UTILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.04.2019 DE 102019110345**
**18.04.2019 DE 102019110344**

(43) Veröffentlichungstag der Anmeldung:
**21.10.2020 Patentblatt 2020/43**

(60) Teilanmeldung:
**21168842.9 / 3 876 149**

(73) Patentinhaber:
• **Garcia, Markus**
**8834 Schindellegi (CH)**
• **Zellweger, Thomas**
**3629 Oppligen (CH)**

(72) Erfinder:
• **Garcia, Markus**
**8834 Schindellegi (CH)**

• **Zellweger, Thomas**
**3629 Oppligen (CH)**

(74) Vertreter: **Hannke Bittner & Partner mbB Regensburg**
**Prüfeninger Straße 1**
**93049 Regensburg (DE)**

(56) Entgegenhaltungen:
**CN-A- 108 665 373     US-A1- 2018 025 392**

• **ALMADHOUN RANDA ET AL: "Coverage Path Planning with Adaptive Viewpoint Sampling to Construct 3D Models of Complex Structures for the Purpose of Inspection", 2018 IEEE/RSJ INTERNATIONAL CONFERENCE ON INTELLIGENT ROBOTS AND SYSTEMS (IROS), IEEE, 1. Oktober 2018 (2018-10-01), Seiten 7047-7054, XP033491009, DOI: 10.1109/IROS.2018.8593719 [gefunden am 2018-12-27]**

**Beschreibung**

Die vorliegende Anmeldung betrifft ein Verfahren zum physikalischen, insbesondere zum optischen Erfassen zumindest eines Nutzungsobjekts sowie eine entsprechende Vorrichtung. Bisherige Methoden zur Zuordnung eines Nutzungsobjekts zu einer Nutzungsobjektklasse sind zwar kostengünstig, jedoch recht ungenau.

In der Regel wird hierzu eine Fotografie eines Nutzungsobjekts gemacht, um dies anhand deren strukturellen und/oder haptischen Merkmale identifizieren zu können. Hierzu wurde zwar oftmals eine Datenbank benutzt, um das auf der Fotografie abgebildete Nutzungsobjekt mit in einer Datenbank hinterlegten Nutzungsobjekten zu vergleichen, jedoch war dieser Vergleich oftmals fehlerhaft und ungenau, da es also im Vergleich oftmals auf optische und/oder datentechnische Kleinigkeiten ankommt. Ein Ziel der vorliegenden Anmeldung ist es nun, derartige Ungenauigkeiten und/oder auftretende Fehler in dem Abgleichprozess zwischen dem aufgenommenen Nutzungsobjekt und einem in der Datenbank hinterlegten Nutzungsobjekt zu vermeiden.

Die CN 108 665 373 A offenbart ein interaktives Verarbeitungsverfahren, eine Vorrichtung, eine Verarbeitungseinrichtung und einen Client für die Fahrzeugschadenbewertung. Gemäß den bereitgestellten Ausführungsformen öffnet ein Benutzer eine Anwendung zur Bewertung von Endgeräteschäden und startet ein Aufnahmefenster, das mit AR verbunden ist, um ein Fahrzeug aufzunehmen. Die Schießanleitung und das Feedback für den Benutzer werden entsprechend der tatsächlichen Position des Fahrzeugs, des Winkels und anderer Informationen ausgeführt, eine Schadenserkennung kann für den Benutzer nur durch Schießen entsprechend der Schießanleitungsinformationen durchgeführt werden, ohne dass andere komplexe Operationen wie die Bereitstellung anderer Schießvideos durchgeführt werden, und dann werden eine schnelle Schadensbewertung und eine Schadensregulierung realisiert. Gemäß den in der vorliegenden Spezifikation beschriebenen Ausführungsformen benötigt der Benutzer keine professionellen Aufnahmefähigkeiten für das Schadensbewertungsbild und keine komplexen Aufnahmeschritte, die Kosten für die Schadensbewertungsverarbeitung sind niedriger, und die Serviceerfahrung des Schadensbewertungsdienstes für den Benutzer kann durch die mit AR verbundene Aufnahmeanleitung weiter verbessert werden. Die D2 zeigt einen Algorithmus zur Planung von Abdeckungspfaden mit adaptivem Viewpoint-Sampling vor, um genaue 3D-Modelle komplexer, großer Strukturen mit unbemannten Luftfahrzeugen (UAV) zu erstellen. Der entwickelte Algorithmus, Adaptive Search Space Coverage Path Planner (ASSCPP), nutzt ein bestehendes 3D-Referenzmodell der komplexen Struktur und die Rauschmodelle der Onboard-Sensoren, um Pfade zu generieren, die auf der Grundlage der zurückgelegten Strecke und der Qualität des Modells bewertet werden. Der Algorithmus erzeugt eine Reihe von Aussichtspunkten, indem er ein adaptives Sampling durchführt, das die Suche auf Bereiche mit geringer Genauigkeit und geringer Abdeckung lenkt. Der Algorithmus prognostiziert die prozentuale Abdeckung, die sich ergibt, wenn man dem generierten Abdeckungspfad unter Verwendung des Referenzmodells folgt. Eine Reihe von Experimenten wurde in realen und simulierten Umgebungen mit Strukturen unterschiedlicher Komplexität durchgeführt, um die Gültigkeit des vorgeschlagenen Algorithmus zu testen. (Veröffentlicht bei ALMADHOUN RANDA ET AL, in 2018 IEEE/RSJ International Conference on Intelligent Robots and Systems (IROS))

Die US 2018/025392 A1 zeigt, dass verlässliche Bewertungsdaten für Einzelpersonen und Unternehmen wichtig sind, um Werturteile über den Kauf, den Verkauf, die Nutzung und die Veräußerung von Vermögenswerten zu treffen. In den meisten Fällen ist jedoch eine Partei gegenüber der anderen Partei verpflichtet, Informationen zur Bewertung zu liefern, und diese können der Wahrheit, einem Teil der Wahrheit oder nicht der Wahrheit entsprechen. Es wäre daher vorteilhaft, ein System bereitzustellen, das den Nutzern einen Bewertungsbericht liefert, der von einem anderen Nutzer über eine standardisierte Abfolge von grafischen Benutzeroberflächen erstellt wurde, so dass die Bewertungsberichte, auf die die Nutzer zugreifen, ein gewisses Maß an Standardisierung aufweisen. Darüber hinaus können die Nutzer z. B. innerhalb einer Anzeige einen zusammenfassenden Bewertungsbericht/Score verwenden, der bei Auswahl den Zugriff auf den vollständigen Bewertungsbericht auslöst.

Eine Lösung des vorstehenden Problems bildet daher der hierbei beanspruchte und vorgestellte Patentanspruch 1.

Es ist daher eine Aufgabe der vorliegenden Erfindung, ein Verfahren zur physikalischen, insbesondere zur optischen Erfassung zumindest eines Nutzungsobjekts anzubieten, welches nicht nur kostengünstig und zeitsparend ist, sondern zudem eine ganz besonders hohe Genauigkeit im Abgleich zwischen einem Nutzungsobjekt und einem in einer Datenbank hinterlegten Nutzungsobjekt bildet, um ein Nutzungsobjekt eindeutig, vorzugsweise eineindeutig identifizieren zu können.

Gemäß zumindest einer Ausführungsform umfasst das hier vorgestellte Verfahren zur physikalischen, insbesondere zur optischen, Erfassung zumindest eines Nutzungsobjektes, zumindest ein Bereitstellen eines Nutzungsobjektes. Bei dem Nutzungsobjekt kann es sich generell um ein, einer Nutzung zugeführtes oder zuzuführendes oder einer Nutzung enthaltenes, Objekt, insbesondere dreidimensionales Objekt handeln. Dabei bedeutet der Begriff "nutzen" im Sinne der Anmeldung jedwede Handhabung hinsichtlich eines Zweckes.

Gemäß zumindest einer Ausführungsform wird insbesondere in einem zweiten Schritt zumindest eine Verarbeitungseinheit bereitgestellt, mittels welcher das Nutzungsobjekt und/oder einem Nutzungsobjekt eindeutig, vorzugs-

weise eindeutig zugeordnetes Identifikationsmittel physikalisch erfasst wird, woraus zumindest ein Kennwert des Nutzungsobjektes gewonnen wird.

Bei der Verarbeitungseinheit kann es sich um eine Rechner- und/oder Speichereinheit handeln. Vorzugsweise ist die Verarbeitungseinheit auch dazu eingerichtet und dafür vorgesehen, Fotografien anzufertigen. Hierzu kann die Verarbeitungseinheit zumindest eine Kamera oder zumindest einen Teil einer Kamera aufweisen. Zum Beispiel ist das Nutzungsobjekt tragbar ausgebildet, was heißt, dass das Nutzungsobjekt nicht an einem Boden oder an einem mit dem Bodenelement verbundenen Handhabungsvorrichtung verbindbar ist. "Tragbar" kann insbesondere im Sinne der Erfindung heißen, dass das Verarbeitungselement derartige Abmessungen und ein derartiges Gewicht aufweist, als dass dieses dazu eingerichtet und dafür vorgesehen ist, händisch insbesondere mit einer Hand gehalten zu werden. Alternativ hierzu kann die Verarbeitungseinheit auch mit einem Boden, auf welchem das Nutzungsobjekt aufgestellt ist, lösbar oder unlösbar verbunden sein. Eine derartige Verbindung kann über die obig beschriebene Handhabungsvorrichtung hergestellt sein. In dieser Ausführungsform kann die Verarbeitungseinheit entlang von Führungswegen, beispielsweise entlang zumindest einer Schiene oder eines Schienensystems relativ zu dem Nutzungsobjekt geführt werden.

Erfindungsgemäß wird insbesondere in einem dritten Schritt eine Nutzungsobjektklassifikation durchgeführt, insofern, als dass der Kennwert mit einem in einer Datenbank der Verarbeitungseinheit und/oder mit einer Datenbank einer externen CPU verglichen wird, indem die Verarbeitungseinheit und/oder die CPU und/oder der Nutzer selbst, ein dem Kennwert entsprechendes Datenobjekt auswählt und in einem Bildschirm der Verarbeitungseinheit darstellt, sodass ein Kamerabild des Nutzungsobjekts zumindest mit dem Datenobjekt zumindest teilweise optisch auf den Bildschirm überlagert und/oder nebeneinander dargestellt wird.

Bei dem Kennwert handelt kannes sich um eine reelle Zahl größer 0, vorstellbar ist jedoch auch, dass sich der Kennwert aus verschiedenen Teilkennwerten zusammensetzt. Ein Nutzungsobjekt weist daher im Hinblick auf eine Außenfarbe einen Teilkennwert, im Hinblick auf Maximalabmessungen in Höhe und Breite und/oder Tiefe einen weiteren Kennwert, sowie in Hinblick auf Gewicht einen weiteren Teilkennwert. Daher wird ein solcher Kennwert durch die Kombination dieser drei Teilkennwerte gebildet. Der Kennwert wird in Form einer Summe aus den vorgenannten Teilkennwerten bestimmt. Erfindungsgemäß weist der erste Teilkennwert mit einem ersten Gewichtsfaktor, der zweite Teilkennwert mit einem zweiten Gewichtsfaktor und ein dritter Teilkennwert mit einem dritten Gewichtsfaktor auf gemäß der Formel:

$$K = G1 * K1 + G2 * K2 + G3 * K3,$$

wobei die Werte K1 bis K3 die jeweiligen Teilwerte darstellen und die Faktoren G1 bis G3 (welche reelle positive Zahlen darstellen) jeweilig Gewichtsfaktoren der Teilkennwerte bezeichnen. Bei der hier vorgestellten Nutzungsobjektklassifikation kann es sich um einen rein optischen Vergleich zwischen dem mit einer obig genannten Kamera aufgenommenen Nutzungsobjekt und einer in optischer Weise entsprechend hinterlegten Nutzungsobjektvorlage in einer Datenbank handeln.

Möglich ist jedoch auch, dass das Nutzungsobjekt datentechnisch in einzelne Objektklassen unterteilt ist oder kategorisiert werden kann. Insofern wird dann statt eines (analogen) und optischen Vergleichs zwischen aufgenommenen Nutzungsobjekt und in der Datenbank hinterlegten Nutzungsobjekt ein datentechnischer, beispielsweise analoger Vergleich vorgenommen. Das Nutzungsobjekt wird daher durch eine Umwandlungseinheit in einzelne Daten, zum Beispiel Datenklassen, zerlegt, wobei diese dann einzeln oder gemeinsam mit entsprechend in der Datenbank hinterlegten Daten oder Datenklassen verglichen wird.

Bei dem Datenobjekt handelt es sich entsprechend um ein in der Datenbank hinterlegtes Vorlagebild des entsprechenden Nutzungsobjekts. Ist einmal der Kennwert des Nutzungsobjekts ermittelt, wird anhand des Kennwertes das entsprechende Datenbankobjekt, welches das Nutzungsobjekt optisch abbilden kann, ausgewählt, um auf dem Bildschirm neben dem tatsächlich aufgenommenen Nutzungsobjekt dargestellt zu werden.

Gemäß zumindest einer Ausführungsform wird in einem weiteren Schritt ein Erfassungsvorgang durch einen Nutzer und/oder eine Durchführungsvorrichtung, des Nutzungsobjektes durchgeführt, sodass das Nutzungsobjekt derart erfasst wird, dass eine durch den Erfassungsvorgang erfasste Abbildung des Nutzungsobjektes identisch oder maßstabsskaliert identisch mit dem auf dem Bildschirm dargestellten Datenbankobjekt zeitgleich dargestellt wird. "Identisch" heißt in diesem Zusammenhang, ein anhand des Kennwertes und/oder der optischen Maße des Nutzungsobjektes größte Näherung an einen entsprechend in der Datenbank hinterlegtes Nutzungsobjekt. Dies kann heißen, dass das Nutzungsobjekt, welches durch die Verarbeitungseinheit erfasst werden kann, nicht in allen Maßen und Abnutzungen dem in der Datenbank entsprechend des Kennwertes identifizierten Nutzungsobjekt entspricht, jedoch anhand von vorfestgelegten Mindestmaßen die größte Übereinstimmung hergestellt wird.

Denkbar ist, dass es sich bei dem Nutzungsobjekt um ein Fahrzeug, beispielsweise einen 3er BMW handelt. Das Nutzungsobjekt selber kann zum Beispiel einen Spoiler aufweisen und/oder auch tiefer gelegt sein. Ist nun ein entsprechendes Nutzungsobjekt nicht auch mit einem zusätzlichen Spoiler und einer tiefer gelegten Version in der Datenbank hinterlegt, sondern weist die Datenbank lediglich generell ein Basismodell eines 3er BMWs auf, kann die Verarbeitungseinheit und/oder die Datenbank und/oder die externe CPU trotzdem dieses Basis-3er-Modell als nächstliegende Übereinstimmung mit dem Nutzungsobjekt auswählen, zum Beispiel auch deshalb weil die Kennwerte des Nutzungsobjektes beispielsweise anhand einer Fahrzeugplakette identisch sind.

Mit der oben genannten Nutzungsobjektklassifikation in Verbindung mit der entsprechenden Durchführung auf Basis des physikalischen Erfassungsvorgangs kann daher erreicht sein, dass durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zugeordnet wird.

Bei dem Fahrzeugtypen kann es sich wie obig bereits beschrieben zum Beispiel um einen BMW der 3er-Klasser oder um jeden anderen auf den deutschen Straßen oder dem internationalen Straßensystem zugelassenes Fahrzeug handeln.

Erfindungsgemäß umfasst das Verfahren zum physikalischen, insbesondere zum optischen Erfassen zumindest eines Nutzungsobjektes zunächst einen ersten Schritt, wonach ein Nutzungsobjekt bereitgestellt wird, wobei in einem zweiten Schritt zumindest eine Verarbeitungseinheit bereitgestellt wird, mittels welcher das Nutzungsobjekt und/oder einem Nutzungsobjekt eindeutig, vorzugsweise eineindeutig zugeordnetes Identifikationsmittel physikalisch erfasst wird, woraus zumindest ein Kennwert des Nutzungsobjektes gewonnen wird.

In einem nächsten Schritt wird eine Nutzungsobjektklassifikation durchgeführt, insofern nämlich, als dass der Kennwert mit zumindest einem in einer Datenbank der Verarbeitungseinheit und/oder mit einer Datenbank in einer externen CPU verglichen wird und die Verarbeitungseinheit 2 und/oder die CPU und/oder der Nutzer selbst ein dem Kennwert entsprechendes Datenbankobjekt erfindungsgemäß auswählt und in einem Bildschirm der Verarbeitungseinheit darstellt, sodass ein Kamerabild des Nutzungsobjektes zusammen mit dem Datenbankobjekt zumindest teilweise optisch auf dem Bilderschirm überlagert und/oder nebeneinander dargestellt wird.

Des Weiteren wird in einem darauf folgenden Schritt eine Durchführung zumindest eines physikalischen Erfassungsvorgangs, zum Beispiel durch einen Nutzer und/oder eine Durchführungsvorrichtung, insbesondere zumindest eine Fotografie des Nutzungsgeräte durchgeführt, sodass das Nutzungsobjekt derart erfasst wird, dass eine durch den Erfassungsvorgang erfasste Abbildung des Nutzungsobjektes identisch oder maßstabsskaliert identisch mit dem auf dem Bildschirm dargestellten Datenbankobjekt zeitgleich dargestellt wird, wobei durch den Erfassungsvorgang das Nutzungsobjekt von der Verarbeitungseinheit 2 und/oder der CPU und/oder dem Nutzer zumindest eine Nutzungsobjektklasse, zum Beispiel einem Fahrzeugtyp, zugeordnet wird.

Gemäß zumindest einer Ausführungsform umfasst der physikalische Erfassungsvorgang zumindest eine zeitliche Erfassungssequenz, wo während der Erfassungssequenz zumindest zwei verschiedene Aufnahmen des Nutzungsobjektes durchgeführt werden, wobei jede Aufnahme zumindest einem Datenbankobjekt zugeordnet ist. Die Erfassungssequenz erfasst eine Anleitung an eine Durchführungsvorrichtung und/oder an einen Nutzer, das Nutzungsobjekt unter verschiedenen Winkeln, verschiedenen Abständen mit verschiedenen Farbkontrasten oder ähnlichem zu fotografieren, um eine Identifikation mit einem in der Datenbank hinterlegten Nutzungsobjekt zu vereinfachen.

Gemäß mindestens einer Ausführungsform erfolgt nach der kennwertmäßigen Erfassung und zur Nutzungsobjekt-Klassenidentifikation auf dem Bildschirm zumindest eine zeitlich sequentielle Erfassungsanleitung zur Erfassung zumindest zweier Aufnahmen. Insbesondere wird ein derartiger Verfahrensschritt entlang dieser seitlichen Erfassungssequenz abgefahren. Die Erfassungssequenz kann daher im Hinblick auf den Ort, auf eine Aufnahmehelligkeit oder ähnliches genaue Anleitungen an den Nutzer und/oder eine Durchführungsvorrichtung aufweisen, sodass entlang vorgegebener Punkte die Verarbeitungseinheit, welche vorzugsweise eine optische Kamera umfasst, das Nutzungsobjekt optisch abwehrt.

Zur genaueren Orientierung an speziellen Orientierungspunkten des Nutzungsobjekts ist an dem Nutzungsobjekt zumindest ein, vorzugsweise jedoch mehrere Orientierungspunkte vorzugsweise auch lösbar angebracht. Solche Orientierungspunkte sind Markierungselemente, welche die Kamera der Verarbeitungseinheit besonders einfach aufnehmen kann. Wobei es sich bei den Markierungselementen um Bar- oder Strichcodes und/oder um NFC-Chips handelt.

Derartige Markierungselemente können daher auch passive Bauelemente sein. Denkbar ist jedoch auch, dass solche Markierungselemente lösbar auf das Nutzungsobjekt aufgebracht, zum Beispiel aufgeklebt werden können. Solche Nutzungsobjekte können eine eigene Energieversorgung, beispielsweise eine Batterieversorgung, aufweisen. Solche mit einer Batterie versehenden Markierungselemente können im optisch sichtbaren oder im unsichtbaren, zum Beispiel Infrarot- oder Mikrowellenbereich elektromagnetische Strahlen aussenden, welche von einem Ortungselement der Verarbeitungseinheit detektiert werden können und wodurch die Verarbeitungseinheit dazu in der Lage ist, festzustellen, in welcher Position es sich relativ zu dem Nutzungsobjekt befindet.

Alternativ oder zusätzlich ist jedoch auch vorstellbar, dass die Markierungselemente virtuelle Markierungselemente sind, welche aus der Datenbank geladen werden und welche ebenso wie das Nutzungsobjekt selbst aus der Datenbank als Bild, beispielsweise als ein drittes Bild zusammen mit einer Fotografie des Nutzungsobjekts und dementsprechend virtuell aus der Datenbank geladenen Erscheinung des Nutzungsobjekts auf dem Bildschirm des Nutzungsobjektes dargestellt werden, können daher ebenso wie die Datenbankobjekte (welche die Nutzungsobjekte in virtueller Hinsicht abbilden können und welche in der Datenbank gespeichert sind), ebenso als weitere Datenbankobjekte in der Datenbank der Verarbeitungseinheit und/oder der externen CPU hinterlegt sein. Zum Beispiel kann mit ein und demselben Kennwert sowohl das Nutzungsobjekt) also auch das weitere Datenbankobjekt (zumindest ein Markierungselement) gemeinsam in die Verarbeitungseinheit geladen und/oder auf dem Bildschirm der Verarbeitungseinheit dargestellt werden.

Erfindungsgemäß gibt die zeitlich sequentielle Fassungsanleitung dem Nutzer einen Erfassungsabstand und/oder einen Erfassungswinkel relativ zum Nutzungsobjekt vor.

Wie obig bereits erwähnt, leistet daher die Erfassungsanleitung einen genauen Ablaufplan, vorzugsweise in vollautomatischer Hinsicht in Bezug auf die Aufnahme der einzelnen Abbildungen, insbesondere Fotografien der Nutzungsobjekte.

Gemäß zumindest einer Ausführungsform ist der Kennwert von einem Identifikationsmittel, zum Beispiel einer Nutzungsplakette des Nutzungsobjektes, entnommen, insbesondere gescannt. Der Kennwert wird daher ebenso auch vorzugsweise vollautomatisch von der Verarbeitungseinheit, welche zum Beispiel eine optische Kamera aufweist, aufgenommen. Vorzugsweise ist es für den Benutzer und/oder die Durchführungsvorrichtung nicht mehr nötig, den Kennwert manuell in die Verarbeitungseinheit eingeben zu müssen.

Gemäß zumindest einer Ausführungsform umfasst oder ist die Verarbeitungseinheit ein Smartphone oder eine Kamera. Ist die Verarbeitungseinheit ein Smartphone oder eine Kamera, kann diese wie obig bereits erwähnt, händisch handhabbar sein.

Gemäß zumindest einer Ausführungsform ist die Verarbeitungseinheit an einem Aufnahmeelement befestigt, welches sich entsprechend den Vorgaben durch die Erfassungssequenz relativ zu dem Nutzungsobjekt bewegt. Die Verarbeitungseinheit kann sich daher mit dem Aufnahmeelement zusammen entsprechend der Erfassungssequenz relativ zu dem Nutzungsobjekt bewegen. Zwar kann in einem derartigen Fall die Verarbeitungseinheit ein Smartphone oder eine Kamera sein oder umfassen und die Verarbeitungseinheit kann trotzdem auch eine handhabbare Verarbeitungseinheit sein. Dies ist jedoch an einer größeren Einheit, nämlich dem Aufnahmeelement befestigt. Vorzugsweise umfasst das Aufnahmeelement alle nötigen Komponenten, um sich vollautomatisch oder durch manuelle Kraft des Nutzers entlang des Nutzungsobjekts bewegen zu lassen.

Gemäß zumindest einer Ausführungsform handelt es sich bei dem Aufnahmeelement um eine Drohne, welche entsprechend der Erfassungssequenz relativ zu dem Nutzungsobjekt gelenkt wird, um die einzelnen Aufnahmen vorzugsweise entlang oder an den oben genannten Markierungselementen durchführen zu können.

Im Sinne der Erfindung kann es sich bei einer "Drohne" um ein unbemanntes Fahrzeug, vorzugsweise um ein unbemanntes Fluggerät mit einem oder mehreren Helikopterrotoren handeln. Die Drohne kann dann kabellos oder kabelgebunden über eine Steuereinrichtung von dem Nutzer und/oder von der Durchführungsvorrichtung manuell oder auch voll automatisch gesteuert und damit gelenkt werden.

Mittels der Drohne ist es insofern möglich, dass bei einer Aufnahme des Nutzungsobjekts um das Nutzungsobjekt herum sehr platzsparend vorgegangen werden kann. Insbesondere kann auf einen Sicherheitsabstand des Nutzungsobjekts zu anderen Nutzungsobjekten, beispielsweise anderen Autos eines Autosalons verzichtet sein, sodass die Drohne vorzugsweise schwebend die einzelnen zu fotografierenden Positionen entsprechend der Ermittlungssequenz abfährt, ohne dass andere nicht beteiligte Nutzungsobjekte sehr weit weggefahren werden müssten. Die Drohne würde dann einfach von oben sich dem Nutzungsobjekt nähern und beispielsweise auch in das Interieur des Autos hineinfahren, um auch Innenaufnahmen aufnehmen zu können.

Gemäß zumindest einer Ausführungsform umfasst die Erfassungssequenz ebenso auch Steuerungsdaten zur Flughöhe der Drohne, sodass die Drohne in seitlicher Hinsicht, vorzugsweise vollautomatisch die Erfassungssequenz abfliegt. Ist einmal beispielsweise anhand der obig genannten Markierungselemente eine bestimmte Erfassungssequenz, die von dem Nutzer und/oder Durchführungsvorrichtung vorgegeben sein kann, durch die Verarbeitungseinheit aufgerufen, kann ein vollautomatischer Prozess ablaufen, an dessen Ende die eindeutige bzw. vorzugsweise die eineindeutige Identifikation des Nutzungsobjekts mit einem in der Datenbank hinterlegten Nutzungsobjekt stehen kann.

Des Weiteren umfasst die vorliegende Erfindung eine entsprechende Vorrichtung, insbesondere eine Vorrichtung zur physikalischen, insbesondere zur optischen Erfassung zumindest eines Nutzungsobjekts.

Dabei weist die hier beschriebene Vorrichtung die gleichen Merkmale auf, wie das hier beschriebene Verfahren und umgekehrt.

Insbesondere umfasst die hier beschriebene Vorrichtung zumindest eine Verarbeitungseinheit, mittels welcher ein Nutzungsobjekt und/oder einem Nutzungsobjekt eindeutig, vorzugsweise eineindeutig, ein zugeordnetes Identifikationsmittel physikalisch erfasst wird, woraus zumindest ein Kennwert des Nutzungsobjektes gewinnbar ist und weiter wobei die Verarbeitungseinheit und/oder eine CPU dazu eingerichtet und dafür vorgesehen ist, eine Nutzungsobjektklassifikation insofern durchzuführen, als dass ein Kennwort des Nutzungsobjektes mit zumindest einem in einer Datenbank der Verarbeitungseinheit und/oder mit einer Datenbank einer externen CPU vergleichbar ist und die Verarbeitungseinheit und/oder die CPU und/oder der Nutzer selbst, einem Kennwert entsprechendes Datenbankobjekt auswählt und einen Bildschirm der Verarbeitungseinheit darstellt, sodass ein Kamerabild des Nutzungsobjektes zusammen mit dem Datenobjekt zumindest teilweise optisch auf dem Bildschirm überlagerbar und/oder nebeneinander darstellbar ist.

Gemäß zumindest einer Ausführungsform umfasst die hier vorgestellte Vorrichtung zur physikalischen, insbesondere zur optischen Erfassung zumindest eines Nutzungsobjektes, zumindest ein Bereitstellen eines Nutzungsobjektes zumindest eine Verarbeitungseinheit, mittels welcher ein Nutzungsobjekt und/oder ein dem Nutzungsobjekt eindeutig, vorzugsweise eineindeutig, zugeordnetes Identifikationsmittel physikalisch erfassbar ist, woraus zumindest ein Kennwert des Nutzungsobjektes gewinnbar ist, und weiter wobei die Verarbeitungseinheit und/oder eine CPU dazu eingerichtet und dafür vorgesehen ist eine Nutzungsobjektklassifikation insofern durchzuführen, als dass ein Kennwert des Nutzungsobjektes mit zumindest einem in einer Datenbank der Verarbeitungseinheit und/oder mit einer Datenbank einer externen CPU vergleichbar ist, und die Verarbeitungseinheit und/oder die CPU und/oder der Nutzer selbst, ein dem Kennwert entsprechendes Datenbankobjekt auswählt und in einem Bildschirm der Verarbeitungseinheit darstellt, sodass ein Kamerabild des Nutzungsobjektes zusammen mit dem Datenbankobjekt zumindest teilweise optisch auf dem Bildschirm überlagerbar und/oder nebeneinander darstellbar ist,

Erfindungsgemäß ist mittels der Verarbeitungseinheit und/oder der CPU zumindest ein physikalischer Erfassungsvorgang, insbesondere zumindest eine Fotografie, des Nutzungsobjektes, auf Basis des auf dem Bildschirm abgebildeten Datenbankobjektes durchführbar, sodass der Nutzer das Nutzungsobjekt derart erfasst, dass eine durch den Erfassungsvorgang erfasste Abbildung des Nutzungsobjektes identisch oder maßstabsskaliert identisch mit dem auf dem Bildschirm dargestellten Datenbankobjekt zeitgleich dargestellt wird, wobei durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zuordenbar wird.

Bei dem Nutzungsobjekt kann es sich generell um ein, einer Nutzung zugeführtes oder zuzuführendes oder einer Nutzung enthaltenes Objekt, insbesondere dreidimensionales Objekt, handeln. Dabei bedeutet der Begriff "nutzen" im Sinne der Anmeldung jedwede Handhabung hinsichtlich eines Zweckes.

Bei der Verarbeitungseinheit kann es sich um eine Rechner- und/oder Speichereinheit handeln. Vorzugsweise ist die Verarbeitungseinheit auch dazu eingerichtet und dafür vorgesehen, Fotografien anzufertigen. Hierzu kann die Verarbeitungseinheit zumindest eine Kamera oder zumindest einen Teil einer Kamera aufweisen. Zum Beispiel ist das Nutzungsobjekt tragbar ausgebildet, was heißt, dass das Nutzungsobjekt nicht an einem Boden oder an einem mit dem Bodenelement verbundenen Handhabungsvorrichtung verbindbar ist. "Tragbar" kann insbesondere im Sinne der Erfindung heißen, dass das Verarbeitungselement derartige Abmessungen und ein derartiges Gewicht aufweist, als dass dieses dazu eingerichtet und dafür vorgesehen ist, händisch insbesondere mit einer Hand gehalten zu werden. Alternativ hierzu kann die Verarbeitungseinheit auch mit einem Boden, auf welchem das Nutzungsobjekt aufgestellt ist, lösbar oder unlösbar verbunden sein. Eine derartige Verbindung kann über die obig beschriebene Handhabungsvorrichtung hergestellt sein. In dieser Ausführungsform kann die Verarbeitungseinheit entlang von Führungswegen, beispielsweise entlang zumindest einer Schiene oder eines Schienensystems relativ zu dem Nutzungsobjekt geführt werden.

Bei dem Kennwert handelt es sich um eine reelle Zahl größer 0, vorstellbar ist jedoch auch, dass sich der Kennwert erfindungsgemäß aus verschiedenen Teilkennwerten zusammensetzt. Ein Nutzungsobjekt weist erfindungsgemäß im Hinblick auf eine Außenfarbe einen Teilkennwert auf, im Hinblick auf Maximalabmessungen in Höhe und Breite und/oder Tiefe einen weiteren Kennwert, sowie in Hinblick auf Gewicht einen weiteren Teilkennwert. Der Kennwert wird durch die Kombination dieser drei Teilkennwerte gebildet sein. Erfindungsgemäß ist, dass jeder Teilkennwert als Gewichtsfaktor einen ersten Gewichtsfaktor, der zweite Teilkennwert mit einem zweiten Gewichtsfaktor und ein dritter Teilkennwert mit einem dritten Gewichtsfaktor aufweist gemäß der Formel:

$$K = G1 * K1 + G2 * K2 + G3 * K3,$$

bestimmt wird,

wobei die Werte K1 bis K3 die jeweiligen Teilwerte darstellen und die Faktoren G1 bis G3 (welche reelle positive Zahlen darstellen) jeweilig Gewichtsfaktoren der Teilkennwerte bezeichnen. Bei der hier vorgestellten Nutzungsobjektklassifikation kann es sich um einen rein optischen Vergleich zwischen dem mit einer obig genannten Kamera aufgenommenen Nutzungsobjekt und einer in optischer Weise entsprechend hinterlegten Nutzungsobjektvorlage in einer Datenbank handeln.

Möglich ist jedoch auch, dass das Nutzungsobjekt datentechnisch in einzelne Objektklassen unterteilt ist oder kategorisiert werden kann. Insofern wird dann statt eines (analogen) und optischen Vergleichs zwischen aufgenommenen Nutzungsobjekt und in der Datenbank hinterlegten Nutzungsobjekt ein datentechnischer, beispielsweise analoger Vergleich vorgenommen. Das Nutzungsobjekt wird daher durch eine Umwandlungseinheit in einzelne Daten, zum Beispiel Datenklassen, zerlegt, wobei diese dann einzeln oder gemeinsam mit entsprechend in der Datenbank hinterlegten Daten oder Datenklassen verglichen wird.

Bei dem Datenobjekt handelt es sich um ein in der Datenbank hinterlegtes erfindungsgemäßes Vorlagebild des entsprechenden Nutzungsobjekts Ist einmal der Kennwert des Nutzungsobjekts ermittelt, wird anhand des Kennwertes das entsprechende Datenbankobjekt, welches das Nutzungsobjekt optisch abbilden kann, ausgewählt, um auf dem Bildschirm neben dem tatsächlich aufgenommenen Nutzungsobjekt dargestellt zu werden.

Gemäß zumindest einer Ausführungsform ist die Verarbeitungseinheit dazu eingerichtet und dafür vorgesehen, dass ein Erfassungsvorgang durch einen Nutzer und/oder eine Durchführungsvorrichtung des Nutzungsobjektes durchgeführt wird, sodass das Nutzungsobjekt derart erfasst wird, dass eine durch den Erfassungsvorgang erfasste Abbildung des Nutzungsobjektes identisch oder maßstabskaliert identisch mit dem auf dem Bildschirm dargestellten Datenbankobjekt zeitgleich dargestellt wird. "Identisch" heißt in diesem Zusammenhang, ein anhand des Kennwertes und/oder der optischen Maße des Nutzungsobjektes größte Näherung an einen entsprechend in der Datenbank hinterlegtes Nutzungsobjekt. Dies kann heißen, dass das Nutzungsobjekt, welches durch die Verarbeitungseinheit erfasst werden kann, nicht in allen Maßen und Abnutzungen dem in der Datenbank entsprechend des Kennwertes identifizierten Nutzungsobjekt entspricht, jedoch anhand von vorfestgelegten Mindestmaßen die größte Übereinstimmung hergestellt wird.

Denkbar ist, dass es sich bei dem Nutzungsobjekt um ein Fahrzeug, beispielsweise einen 3er BMW handelt. Das Nutzungsobjekt selber kann zum Beispiel einen Spoiler aufweisen und/ oder auch tiefer gelegt sein. Ist nun ein entsprechendes Nutzungsobjekt nicht auch mit einem zusätzlichen Spoiler und einer tiefer gelegten Version in der Datenbank hinterlegt, sondern weist die Datenbank lediglich generell ein Basismodell eines 3er BMWs auf, kann die Verarbeitungseinheit und/oder die Datenbank und/oder die externe CPU trotzdem dieses Basis-3er-Modell als nächstliegende Übereinstimmung mit dem Nutzungsobjekt auswählen, zum Beispiel auch deshalb weil die Kennwerte des Nutzungsobjektes beispielsweise anhand einer Fahrzeugplakette identisch sind.

Mit der oben genannten Nutzungsobjektklassifikation in Verbindung mit der entsprechenden Durchführung auf Basis des physikalischen Erfassungsvorgangs kann daher erreicht sein, dass durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zugeordnet wird.

Bei dem Fahrzeugtypen kann es sich wie obig bereits beschrieben zum Beispiel um einen BMW der 3er-Klasser oder um jeden anderen auf den deutschen Straßen oder dem internationalen Straßensystem zugelassenes Fahrzeug handeln.

Erfindungsgemäß umfasst der physikalische Erfassungsvorgang zumindest eine zeitliche Erfassungssequenz, wo während der Erfassungssequenz zumindest zwei verschiedene Aufnahmen des Nutzungsobjektes durchgeführt werden, wobei jede Aufnahme zumindest einem Datenbankobjekt zugeordnet ist.

Erfindungsgemäß erfasst die Erfassungssequenz eine Anleitung an eine Durchführungsvorrichtung und/oder an einen Nutzer, das Nutzungsobjekt unter verschiedenen Winkeln, verschiedenen Abständen mit verschiedenen Farbkontrasten oder ähnlichem zu fotografieren, um eine Identifikation mit einem in der Datenbank hinterlegten Nutzungsobjekt zu vereinfachen.

Gemäß mindestens einer Ausführungsform erfolgt nach der kennwertmäßigen Erfassung und zur Nutzungsobjekt-Klassenidentifikation auf dem Bildschirm zumindest eine zeitlich sequentielle Erfassungsanleitung der zeitlichen Erfassungssequenz zur Erfassung zumindest zweier Aufnahmen. Insbesondere ist die Verarbeitungseinheit dazu eingerichtet und dafür vorgesehen, dass sie entlang dieser seitlichen Erfassungssequenz abgefahren wird. Die Erfassungssequenz kann daher im Hinblick auf den Ort, auf eine Aufnahmehelligkeit oder ähnliches genaue Anleitungen an den Nutzer und/oder eine Durchführungsvorrichtung aufweisen, sodass entlang vorgegebener Punkte die Verarbeitungseinheit, welche vorzugsweise eine optische Kamera umfasst, das Nutzungsobjekt optisch abwehrt.

Zur genaueren Orientierung an speziellen Orientierungspunkten des Nutzungsobjekts kann erfindungsgemäß an dem Nutzungsobjekt zumindest ein, vorzugsweise jedoch mehrere Orientierungspunkte vorzugsweise auch lösbar angebracht sein. Solche Orientierungspunkte können Markierungselemente sein, welche die Kamera der Verarbeitungseinheit besonders einfach aufnehmen kann. Beispielsweise handelt es sich bei den Markierungselementen um Bar- oder Strichcodes und/oder um NFC-Chips.

Derartige Markierungselemente können daher auch passive Bauelemente sein. Denkbar ist jedoch auch, dass solche Markierungselemente lösbar auf das Nutzungsobjekt aufgebracht, zum Beispiel aufgeklebt werden können. Solche Nutzungsobjekte können eine eigene Energieversorgung, beispielsweise eine Batterieversorgung, aufweisen. Solche mit einer Batterie versehenden Markierungselemente können im optisch sichtbaren oder im unsichtbaren, zum Beispiel Infrarot- oder Mikrowellenbereich elektromagnetische Strahlen aussenden, welche von einem Ortungselement der Verarbeitungseinheit detektiert werden können und wodurch die Verarbeitungseinheit dazu in der Lage ist, festzustellen, in welcher Position es sich relativ zu dem Nutzungsobjekt befindet.

Alternativ oder zusätzlich ist jedoch auch vorstellbar, dass die Markierungselemente virtuelle Markierungselemente sind, welche aus der Datenbank geladen werden und welche ebenso, wie das Nutzungsobjekt selbst, aus der Datenbank als Bild, beispielsweise als ein drittes Bild zusammen mit einer Fotografie des Nutzungsobjekts, und dementsprechend virtuell aus der Datenbank geladenen Erscheinung des Nutzungsobjekts, auf dem Bildschirm des Nutzungsobjektes dargestellt werden, können daher ebenso wie die Datenbankobjekte (welche die Nutzungsobjekte in virtueller Hinsicht abbilden können und welche in der Datenbank gespeichert sind), als weitere Datenbankobjekte in der Datenbank der Verarbeitungseinheit und/oder der externen CPU hinterlegt sein. Zum Beispiel kann mit ein und demselben Kennwert sowohl das Nutzungsobjekt) also auch das weitere Datenbankobjekt (zumindest ein Markierungselement) gemeinsam in die Verarbeitungseinheit geladen und/oder auf dem Bildschirm der Verarbeitungseinheit dargestellt werden.

Erfindungsgemäß gibt die zeitlich sequentielle Fassungsanleitung dem Nutzer einen Erfassungsabstand und/oder einen Erfassungswinkel relativ zum Nutzungsobjekt vor.

Wie obig bereits erwähnt, leistet daher die Erfassungsanleitung einen genauen Ablaufplan, vorzugsweise in vollautomatischer Hinsicht in Bezug auf die Aufnahme der einzelnen Abbildungen, insbesondere Fotografien der Nutzungsobjekte.

Gemäß zumindest einer Ausführungsform ist der Kennwert von einem Identifikationsmittel, zum Beispiel einer Nutzungsplakette des Nutzungsobjektes entnommen und/oder entnehmbar, insbesondere gescannt. Der Kennwert wird daher ebenso auch vorzugsweise vollautomatisch von der Verarbeitungseinheit, welche zum Beispiel eine optische Kamera aufweist, aufgenommen. Vorzugsweise ist es für den Benutzer und/oder die Durchführungsvorrichtung nicht mehr nötig, den Kennwert manuell in die Verarbeitungseinheit eingeben zu müssen.

Gemäß zumindest einer Ausführungsform umfasst oder ist die Verarbeitungseinheit ein Smartphone oder eine Kamera. Ist die Verarbeitungseinheit ein Smartphone oder eine Kamera, kann diese wie obig bereits erwähnt, händisch handhabbar sein.

Gemäß zumindest einer Ausführungsform ist die Verarbeitungseinheit an einem Aufnahmeelement befestigt, welches sich entsprechend den Vorgaben durch die Erfassungssequenz relativ zu dem Nutzungsobjekt bewegt. Die Verarbeitungseinheit kann sich daher mit dem Aufnahmeelement zusammen entsprechend der Erfassungssequenz relativ zu dem Nutzungsobjekt bewegen. Zwar kann in einem derartigen Fall die Verarbeitungseinheit ein Smartphone oder eine Kamera sein oder umfassen und die Verarbeitungseinheit kann trotzdem auch eine handhabbare Verarbeitungseinheit sein. Dies ist jedoch an einer größeren Einheit, nämlich dem Aufnahmeelement befestigt. Vorzugsweise umfasst das Aufnahmeelement alle nötigen Komponenten, um sich vollautomatisch oder durch manuelle Kraft des Nutzers entlang des Nutzungsobjekts bewegen zu lassen.

Gemäß zumindest einer Ausführungsform handelt es sich bei dem Aufnahmeelement um eine Drohne, welche entsprechend der Erfassungssequenz relativ zu dem Nutzungsobjekt gelenkt wird, um die einzelnen Aufnahmen vorzugsweise entlang oder an den oben genannten Markierungselementen durchführen zu können.

Im Sinne der Erfindung kann es sich bei einer "Drohne" um ein unbemanntes Fahrzeug, vorzugsweise um ein unbemanntes Fluggerät mit einem oder mehreren Helikopterrotoren handeln. Die Drohne kann dann kabellos oder kabelgebunden über eine Steuereinrichtung von dem Nutzer und/oder von der Durchführungsvorrichtung manuell oder auch voll automatisch gesteuert und damit gelenkt werden.

Mittels der Drohne ist es insofern möglich, dass bei einer Aufnahme des Nutzungsobjekts um das Nutzungsobjekt herum sehr platzsparend vorgegangen werden kann. Insbesondere kann auf einen Sicherheitsabstand des Nutzungsobjekts zu anderen Nutzungsobjekten, beispielsweise anderen Autos eines Autosalons verzichtet sein, sodass die Drohne vorzugsweise schwebend die einzelnen zu fotografierenden Positionen entsprechend der Ermittlungssequenz abfliegt, ohne dass andere nicht beteiligte Nutzungsobjekte sehr weit weggefahren werden müssten. Die Drohne würde dann einfach von oben sich dem Nutzungsobjekt nähern und beispielsweise auch in das Interieur des Autos hineinfahren, um auch Innenaufnahmen aufnehmen zu können.

Gemäß zumindest einer Ausführungsform umfasst die Erfassungssequenz ebenso auch Steuerungsdaten zur Flughöhe der Drohne, sodass die Drohne in seitlicher Hinsicht, vorzugsweise vollautomatisch die Erfassungssequenz abfliegt. Ist einmal beispielsweise anhand der obig genannten Markierungselemente eine bestimmte Erfassungssequenz, die von dem Nutzer und/oder Durchführungsvorrichtung vorgegeben sein kann, durch die Verarbeitungseinheit aufgerufen, kann ein vollautomatischer Prozess ablaufen, an dessen Ende die eindeutige bzw. vorzugsweise die eineindeutige Identifikation des Nutzungsobjekts mit einem in der Datenbank hinterlegten Nutzungsobjekt stehen kann.

Ein Aspekt der Erfindung kann zudem sein, dass mittels der Verarbeitungseinheit und/oder der CPU zumindest ein physikalischer Erfassungsvorgang, insbesondere zumindest eine Fotografie des Nutzungsobjektes auf Basis des auf dem Bildschirm abgebildeten Datenbank, durchführbar ist, sodass der Nutzer das Nutzungsobjekt derart erfasst, dass eine durch den Erfassungsvorgang erfasste Abbildung des Nutzungsobjektes identisch oder maßstabskaliert identisch mit dem auf dem Bildschirm dargestellten Datenbankobjekt zeitgleich dargestellt wird, wobei durch den Erfassungsvorgang das Nutzungsobjekt von der Verarbeitungseinheit und/oder der CPU und/oder dem Nutzer zumindest einer Nutzungsobjektklasse, zum Beispiel einem Fahrzeugtypen, zuordenbar wird.

Die weiteren Ausgestaltungen der obig beschriebenen Vorrichtung können in derselben Art und Weise, insbesondere mit denselben Merkmalen wie das obig beschriebene Verfahren dargelegt sein.

Weitere Vorteile und Ausführungsformen ergeben sich aus den beigefügten Zeichnungen.

Darin zeigen:

Fig.1 bis 2C    sowohl eine Vorrichtung als auch ein Verfahren gemäß der hier beschriebenen Erfindung;
Fig. 3A -3E    eine weitere Ausführungsform des hier beschriebenen Verfahrens.

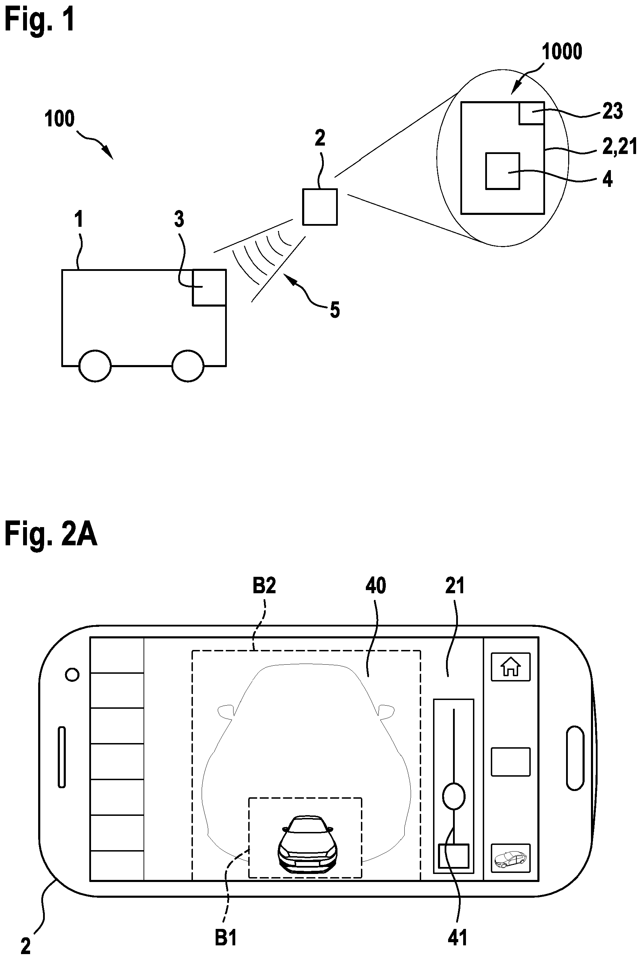

In den Figuren sind gleiche oder gleich wirkende Bestandteile jeweils mit den gleichen Bezugzeichen versehen. In der Figur 1 ist eine erfindungsgemäße Vorrichtung 100 sowie ein erfindungsgemäßes Verfahren gezeigt, wobei die Vorrichtung 100 dazu eingerichtet und vorgesehen ist, ein Nutzungsobjekt in physikalischer Hinsicht insbesondere optisch zu erfassen.

Wie aus der Figur 1 hervorgeht, umfasst die Vorrichtung 100 eine Verarbeitungseinheit 2, mittels welcher ein Nutzungsobjekt 1 und/oder ein Nutzungsobjekt 1 eindeutig und vorzugsweise eineindeutig zugeordnet ist, die das Identifikationsmittel 11 physikalisch erfasst, woraus zumindest ein Kennwert des Nutzungsobjektes gewinnbar ist und weiter wobei die Verarbeitungseinheit 2 und/oder eine CPU dazu eingerichtet und dafür vorgesehen ist, eine Nutzungsobjektklassifikation insofern durchzuführen, als dass ein Kennwert des Nutzungsobjektes zumindest einem in einer Datenbank der Verarbeitungseinheit 2 und/oder mit einer Datenbank einer externen CPU vergleichbar ist und die Verarbeitungseinheit 2 und/oder die CPU und/oder der Nutzer selbst ein dem Kennwert 3 entsprechendes Datenbankobjekt 4 auswählt und in einem Bildschirm der Verarbeitungseinheit 2 darstellt, sodass ein Kamerabild des Nutzungsobjektes 1 zusammen mit dem Datenbankobjekt 4 zumindest teilweise optisch auf dem Bildschirm 21 überlagerbar und/oder nebeneinander darstellbar ist.

Mittels der Verarbeitungseinheit 2 und/oder der CPU ist es möglich, zumindest einen physikalischen Erfassungsvorgang 5 auf Basis des in dem Bildschirm 21 abgebildeten Datenbankobjektes 4 durchzuführen, sodass der Nutzer das Nutzungsobjekt 1 erfasst, dass eine durch den Erfassungsvorgang erfasste Abbildung des Nutzungsobjektes identisch oder maßstabsskaliert identisch, zumindest doch im Wesentlichen identisch, mit dem auf dem Bildschirm 21 dargestellten Datenbankobjekt 4 zeitgleich dargestellt wird, wobei durch den Erfassungsvorgang das Nutzungsobjekt 1 von der Verarbeitungseinheit 2 und/oder der CPU und/oder Nutzer zumindest eine Nutzungsobjektklasse, zum Beispiel einen Fahrzeugtypen zuordenbar ist.

In der Figur 2A ist ein beispielhafter erster Schritt dargestellt, wobei auf dem dort dargestellten Nutzungsobjekt 1, welches in Form eine Smartphones dargestellt ist, auf dem Bildschirm 21 eine Nutzungsobjektklasse (zum Beispiel die Bilder 30), insbesondere in Form eines Beispielfahrzeugtypen, optisch dargestellt ist. Der Beispielfahrzeugtyp ist nicht nur in verkleinerter Form im Bereich B1 auf dem Bildschirm dargestellt, sondern auch in einer vergrößerten, beispielsweise einer 1:1 Form grau schattiert hinterlegt auf dem Bildschirm 21 (siehe Bereich B2) dargestellt.

Diese optisch dargestellte Nutzungsobjektklasse, also dieser dargestellte Fahrzeugtyp dient als Orientierung an dem zu fotografierenden Objekt. Dargestellt ist ebenso auch ein Regler 40, durch dessen Einstellen ein Kontrast und/oder eine Helligkeit des Orientierungsbildes, also insbesondere der Bilder 30, welche jeweils einer optischen Darstellung einer Nutzungsobjektklasse entsprechen, ermöglicht wird. So können Probleme, die bei großer Helligkeit entstehen, eliminiert werden.

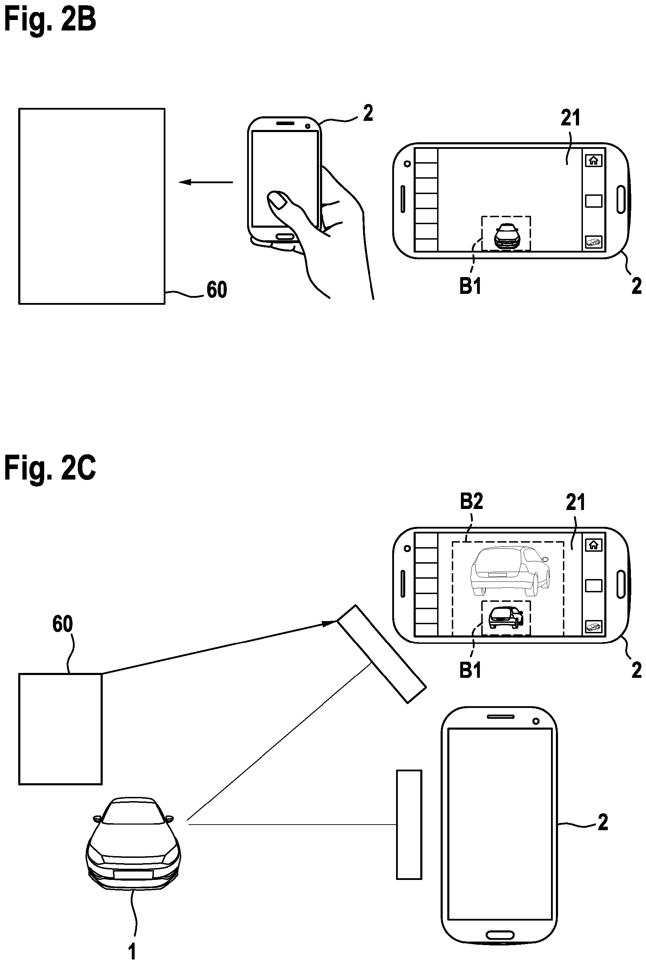

Die Figur 2B zeigt ein kennwertmäßiges Erfassen anhand einer Nutzungsplakette 50 des Nutzungsfahrzeuges. Hierbei wird die Nutzungsplakette 50 optisch durch die Verarbeitungseinheit 2 gescannt. Je nach zu fotografierendem Nutzungsobjekt 1 verändert sich der Winkel, in dem die Verarbeitungseinheit 2, vorliegend beispielhaft als ein Smartphone dargestellt, gehalten werden muss, wodurch eine optimale Qualität für den Vergleichs- und Einordnungsvorgang erzielt werden können.

In der Figur 2C ist in einer weiteren Darstellung dargestellt, dass die Verarbeitungseinheit 2 in verschiedenen Winkelstellungen relativ zum Nutzungsobjekt 1 gehalten werden muss.

Das Obige stellt daher nicht nur den physikalischen Erfassungsvorgang 5 dar, sondern auch die eingangs beschriebene kennwertmäßige Erfassung zur Nutzungsobjektklassifikation.

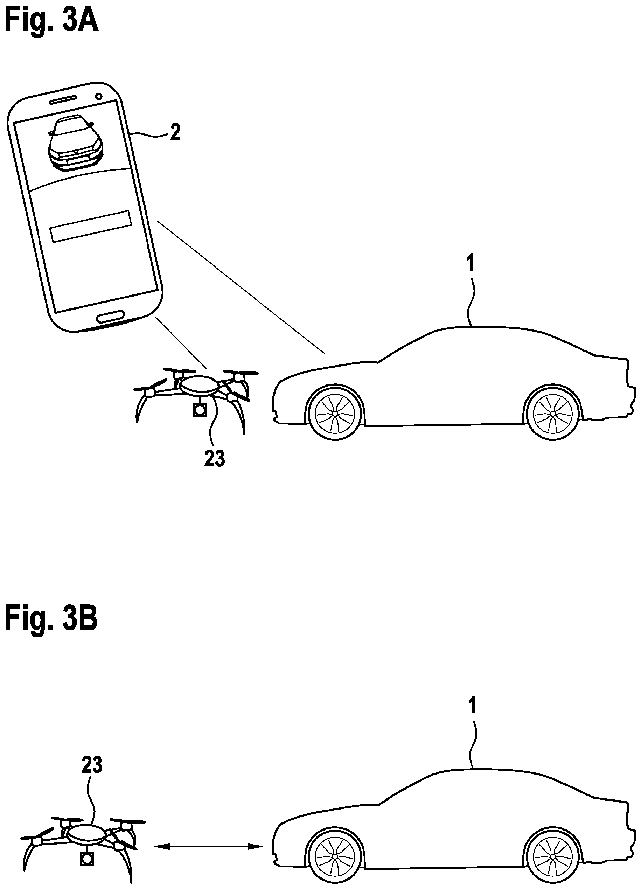

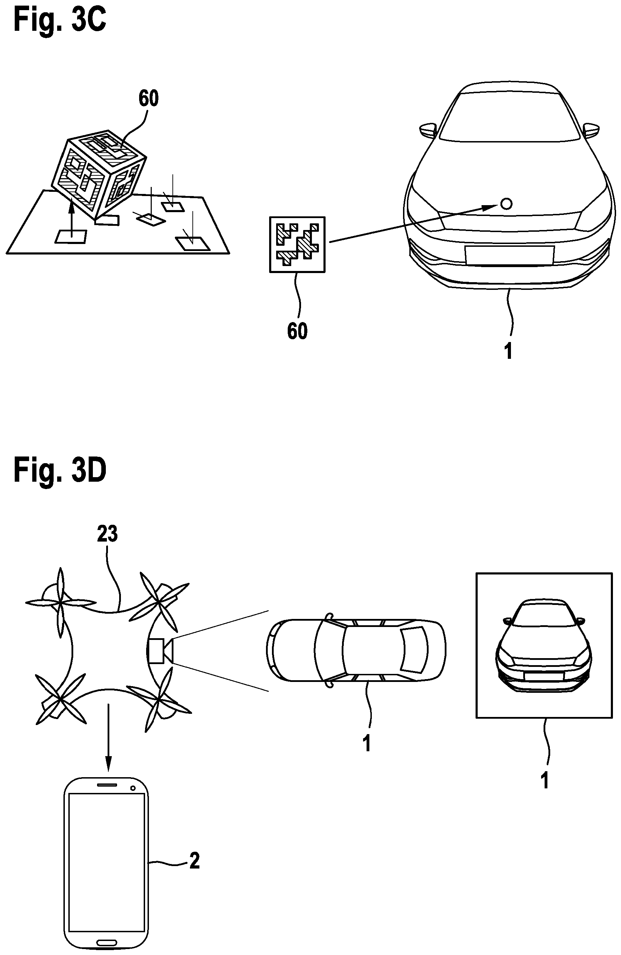

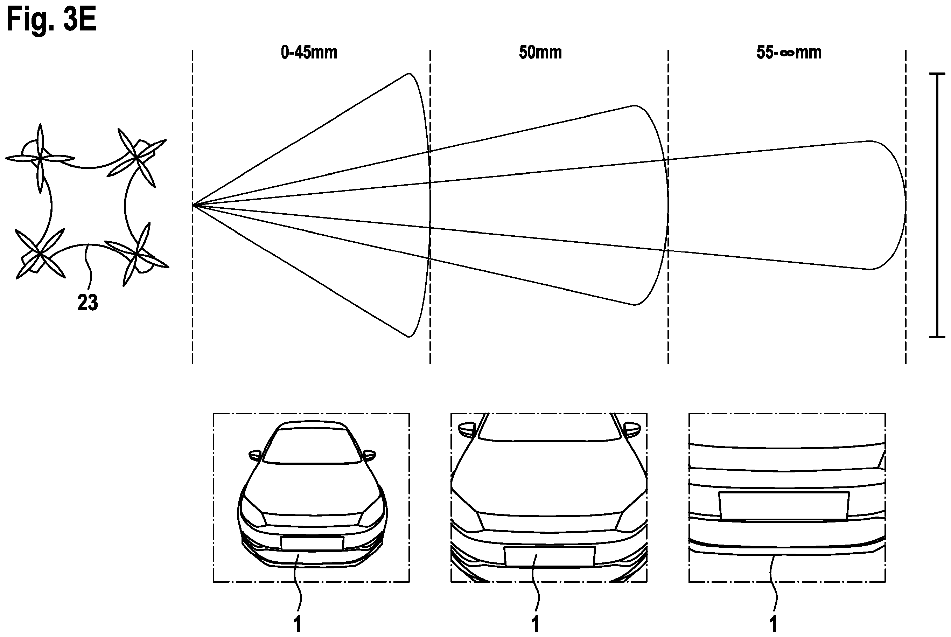

In den Figuren 3 ist in einer weiteren Ausführungsform dargestellt, dass die Verarbeitungseinheit 2 an einem Aufnahmeelement 23, vorliegend einer Drohne, befestigt ist.

Die Figur 3A stellt daher nicht nur eine Drohne 23, sondern ebenso wiederum die Verarbeitungseinheit 2 und das Nutzungsobjekt 1 dar, wobei eine Drohne 23 bei einem Drohnenstart zunächst einen Abstand in die Verarbeitungseinheit 2 vorher eingegeben wird oder von der Erfassungssequenz vorgegeben wird.

Bevor sich daher die Drohne automatisiert und ohne Drohnenpilot orientieren kann, benötigt diese daher nämlich Informationen zum Nutzungsobjekt 1. Anschließend kann die Drohne mit definiertem Abstand vor das Fahrzeug 11 gelegt werden (siehe Figur 3B), um mit Hilfe der Fahrzeugabmessungen jeweils bezogen auf den Startpunkt alle Positionen entsprechend der Erfassungssequenz abzufliegen. In der Figur 3C sind entsprechende Markierungselemente 60 dargestellt, welche entweder auf dem Nutzungsobjekt 1 angebracht sind oder virtuell optisch "darübergelegt" werden.

Bei dem Markieren kann es sich um sogenannte ARUCo-Markierung handeln. Dabei kann es sich um kontrastreiche Symbole handeln, welche speziell für Kameraanwendung entwickelt wurde. Diese können nicht nur Orientierungshelfer, sondern auch Informationen beinhalten. Mit einem solchen Marker kann daher die Drohne 23 den Startpunkt des Drohnenflugs selbst erkennen.

In der Figur 3D ist ein weiterer Ablauf des Drohnenflugs gezeigt, was ebenso auch aus der Figur 3E hervorgeht. In der Figur 3E ist jedoch zusätzlich optisch dargestellt, wie sich eine Brennweite einer Linse, der von der Drohne 23 transportierten Verarbeitungseinheit 2, auf die Aufnahmequalität auswirkt. Auf dem ganz links dargestellten Nutzungsobjekt 1 wurde dieses mit einer Weitwinkelkamera aufgenommen, während das in der Mitte dargestellte Nutzungsobjekt 1 mit einer Normalwinkelkamera und das Nutzungsobjekt 1 ganz rechts mit einer Telekamera aufgenommen wurde. Die Weitwinkelkamera kann einen Abstand von 0 bis 45 mm zum Nutzungsfahrzeug 2 erlauben, die Normalwinkelkamera einen Abstand von etwa 50 mm und ein Teleobjektiv kann einen Abstand ab 55 mm erlauben.

Brennweiten von kleiner 50 mm und größer 50 mm können nämlich unterschiedliche Verzerrungs- und Verzeichnungseffekte erzeugen. Durch die verschiedentliche Verwendung von Brennweiten von beispielsweise 6 mm treten bei den aufgenommenen Bildern somit sichtbare Verzerrungen auf, um einen Vergleich aller Bilder im Anschluss zu haben, sollte eine Nachbearbeitung der aufgenommenen Fotografien nicht erfolgen, sodass die oben genannten verschiedenen Objektive zur Anwendung kommen müssen.

## Bezugszeichenliste

| | |
|---|---|
| 1 | Nutzungsobjekt |
| 2 | Verarbeitungseinheit |
| 3 | Kennwort |
| 4 | Datenbankobjekt |
| 5 | physikalischer Erfassungsvorgang |
| 11 | Identifikationsmittel |
| 21 | Bildschirm |
| 23 | Aufnahmeelement (Drohne) |
| 30 | Bilder |
| 40 | Regler |
| 50 | Nutzungsplakette |
| 60 | Markierungselemente |
| | |
| B1 | Bereich |
| B2 | Bereich |
| 100 | Vorrichtung |
| 1000 | Verfahren |

## Patentansprüche

**1.** Verfahren (1000) zum physikalischen Erfassen zumindest eines Nutzungsobjektes (1), also eines Fahrzeugs (1), umfassend die folgenden Schritte:

- Bereitstellen des Nutzungsobjektes (1),
- Bereitstellen zumindest einer Verarbeitungseinheit (2), mittels welcher das Nutzungsobjekt (1) erfasst wird, woraus zumindest ein Kennwert (3) des Nutzungsobjektes (1) gewonnen wird,
- Wobei sich der Kennwert aus verschiedenen Teilkennwerten zusammensetzt, sodass hierbei ein Nutzungsobjekt:

- im Hinblick auf eine Außenfarbe einen Teilkennwert aufweist,
- im Hinblick auf Maximalabmessungen in Höhe und Breite und/oder Tiefe einen Teilkennwert aufweist und
- in Hinblick auf Gewicht einen weiteren Teilkennwert des Nutzungsobjekts einen Teilkennwert aufweist,
- sodass der Kennwert durch die Kombination dieser drei Teilkennwerte gebildet ist, und diese Kombination in Form einer Summe stattfindet, und wobei der erste Teilkennwert mit einem ersten Gewichtsfaktor, der zweite Teilkennwert mit einem zweiten Gewichtsfaktor und der dritte Teilkennwert mit einem dritten Gewichtsfaktor gemäß der Formel dargestellt wird:

$$K = G1 * K1 + G2 * K2 + G3 * K3 \qquad,$$

wobei die Werte K1 bis K3 die jeweiligen Teilwerte sind und die Faktoren G1 bis G3 jeweilig Gewichtsfaktoren der Teilkennwerte bezeichnen, und
wobei anhand des Kennwertevergleiches eine Nutzungsobjektklassifikation durchgeführt wird, welche ein entsprechendes Datenbankobjekt ausgibt, welches in einem Bildschirm (21) der Verarbeitungseinheit (2) dargestellt wird, sodass ein Kamerabild des Nutzungsobjektes (1) zusammen mit dem Datenbankobjekt (4) zumindest teilweise optisch auf dem Bildschirm (21) überlagert, wobei es sich bei dem Datenbankobjekt um ein entsprechend in der Datenbank hinterlegtes Vorlagebild des entsprechenden Nutzungsobjekts handelt und

- wobei nach der Nutzungsobjektklassifikation zumindest ein physikalischer Erfassungsvorgang (5) durch einen Nutzer erfolgt, welcher das Fotografieren des Nutzungsobjekt umfasst, sodass das Nutzungsobjekt (1) derart erfasst wird, dass eine durch den Erfassungsvorgang erfasste Abbildung des Nutzungsobjektes (1) identisch oder maßstabsskaliert identisch mit dem auf dem Bildschirm (21) dargestellten Datenbankobjekt (4) zeitgleich dargestellt wird, wobei in diesem Zusammenhang identisch heißt, dass ein anhand des Kennwertes und/oder der optischen Maße des Nutzungsobjektes eine größte Näherung an einen entsprechend in der Datenbank hinterlegten Nutzungsobjekt ermittelt wird, sodass das Nutzungsobjekt, welches durch die Verarbeitungseinheit erfasst wird, nicht in allen Maßen und Abnutzungen dem in der Datenbank entsprechenden Kennwert identifizierten Nutzungsobjekt entspricht, jedoch anhand von vorfestgelegten Mindestmaßen die größte Übereinstimmung hergestellt wird, und

wobei durch den Erfassungsvorgang das Nutzungsobjekt (1) von der Verarbeitungseinheit (2) und/oder eine CPU zumindest einer Nutzungsobjektklasse, insbesondere einem genaueren Fahrzeugtyp, zugeordnet wird, wobei der physikalische Erfassungsvorgang (5) zumindest eine zeitliche Erfassungssequenz umfasst, wobei während der Erfassungssequenz zumindest zwei verschiedene Aufnahmen des Nutzungsobjektes (1) durchgeführt werden, wobei die Erfassungssequenz eine Anleitung an eine Durchführungsvorrichtung und/oder an einen Nutzer vorgibt, das Nutzungsobjekt mindestens unter verschiedenen Winkeln oder verschiedenen Abständen oder mit verschiedenen Farbkontrasten zu fotografieren, um eine Identifikation mit einem in der Datenbank hinterlegten Nutzungsobjekt zu vereinfachen, wobei zur genaueren Orientierung während der Erfassungssequenz an dem Nutzungsobjekt zumindest ein, vorzugsweise jedoch mehrere Orientierungspunkte vorzugsweise auch lösbar angebracht sein, wobei Orientierungspunkte Markierungselemente sind, welche die Kamera der Verarbeitungseinheit besonders einfach aufnimmt und erkennt und welche dem Nutzer einen Erfassungsabstand und/oder einen Erfassungswinkel relativ zum Nutzungsobjekt vorgeben, wobei bei den Markierungselementen es sich um Bar- oder Strichcodes und/oder um NFC-Chips handelt.

2. Verfahren (1000) nach Anspruch 1,
**dadurch gekennzeichnet, dass**
der physikalische Erfassungsvorgang (5) zumindest eine zeitliche Erfassungssequenz umfasst, wobei während der Erfassungssequenz zumindest zwei verschiedene Aufnahmen des Nutzungsobjektes (1) durchgeführt werden, wobei jeder Aufnahme zumindest ein Datenbankobjekt (4) zugeordnet ist.

3. Verfahren (1000) nach Anspruch 2,
**dadurch gekennzeichnet, dass**
die zeitlich sequentielle Erfassungsanleitung dem Nutzer eine Erfassungsabstand und/oder einen Erfassungswinkel relativ zu dem Nutzungsobjekt (1) vorgibt.

4. Verfahren (1000) nach zumindest einem der vorhergehenden Ansprüche,
**dadurch gekennzeichnet, dass**
dass die Verarbeitungseinheit (2) ein Smartphone, eine Kamera umfasst oder ist.

5. Verfahren (1000) nach Anspruch 3,
**dadurch gekennzeichnet, dass**
dass die Verarbeitungseinheit (2) an einem Aufnahmeelement (23) befestigt ist, welches sich entsprechend der Vorgaben durch die Erfassungssequenz relativ zu dem Nutzungsobjekt (1) bewegt.

6. Verfahren (1000) nach Anspruch 5,
**dadurch gekennzeichnet, dass**
das Aufnahmeelement (23) eine Drohne ist, welche entsprechend der Erfassungssequenz relative zu dem Nutzungsobjekt (1) gelenkt wird, um die einzelnen Aufnahmen durchzuführen.

**7.** Verfahren (1000) nach Anspruch 6,
**dadurch gekennzeichnet, dass**
die Erfassungssequenz ebenso Steuerungsdaten zur Flughöhe der Drohne (23) umfasst, sodass die Drohne (23) in zeitlicher Hinsicht, vorzugsweise vollautomatisch, die Erfassungssequenz abfliegt.

**8.** Vorrichtung (100) zum physikalischen Erfassen zumindest eines Nutzungsobjektes (1), also eines Fahrzeugs (1), wobei die Vorrichtung (1000) aufweist:

- Zumindest eine Verarbeitungseinheit (2), mittels welcher ein Nutzungsobjekt erfassbar ist, woraus zumindest ein Kennwert (3) des Nutzungsobjektes (1) gewinnbar ist,
- Wobei sich der Kennwert aus verschiedenen Teilkennwerten zusammensetzt, sodass hierbei ein Nutzungsobjekt:

- im Hinblick auf eine Außenfarbe einen Teilkennwert aufweist,
- im Hinblick auf Maximalabmessungen in Höhe und Breite und/oder Tiefe einen Teilkennwert aufweist und
- in Hinblick auf Gewicht einen weiteren Teilkennwert des Nutzungsobjekts einen Teilkennwert aufweist,
- sodass der Kennwert durch die Kombination dieser drei Teilkennwerte gebildet ist, und diese Kombination in Form einer Summe stattfindet, und wobei

der erste Teilkennwert mit einem ersten Gewichtsfaktor, der zweite Teilkennwert mit einem zweiten Gewichtsfaktor und der dritte Teilkennwert mit einem dritten Gewichtsfaktor gemäß der Formel dargestellt wird:

$$K = G1 * K1 + G2 * K2\vdash$$

wobei die Werte K1 bis K2 die jeweiligen Teilwerte sind und die Faktoren G1 bis G2 jeweilig Gewichtsfaktoren der Teilkennwerte bezeichnen,
wobei anhand des Kennwertevergleiches eine Nutzungsobjektklassifikation durchgeführt wird, welche ein entsprechendes Datenbankobjekt ausgibt, welches in einem Bildschirm (21) der Verarbeitungseinheit (2) dargestellt wird, sodass ein Kamerabild des Nutzungsobjektes (1) zusammen mit dem Datenbankobjekt (4) zumindest teilweise optisch auf dem Bildschirm (21) überlagert, wobei es sich bei dem Datenbankobjekt um ein entsprechend in der Datenbank hinterlegtes Vorlagebild des entsprechenden Nutzungsobjekts handelt und

- wobei nach der Nutzungsobjektklassifikation zumindest ein physikalischer Erfassungsvorgang (5), durch einen Nutzer erfolgt, welcher das Fotografieren des Nutzungsobjekt umfass, sodass, das Nutzungsobjekt (1) derart erfasst wird, dass eine durch den Erfassungsvorgang erfasste Abbildung des Nutzungsobjektes (1) identisch oder maßstabsskaliert identisch mit dem auf dem Bildschirm (21) dargestellten Datenbankobjekt (4) zeitgleich dargestellt wird, wobei in diesem Zusammenhang identisch heißt, dass ein anhand des Kennwertes und/oder der optischen Maße des Nutzungsobjektes eine größte Näherung an einen entsprechend in der Datenbank hinterlegten Nutzungsobjekt ermittelt wird, sodass das Nutzungsobjekt, welches durch die Verarbeitungseinheit erfasst wird, nicht in allen Maßen und Abnutzungen dem in der Datenbank entsprechenden Kennwert identifizierten Nutzungsobjekt entspricht, jedoch anhand von vorfestgelegten Mindestmaßen die größte Übereinstimmung hergestellt wird, und

wobei durch den Erfassungsvorgang das Nutzungsobjekt (1) von der Verarbeitungseinheit (2) und/oder eine CPU zumindest einer Nutzungsobjektklasse, insbesondere einem genaueren Fahrzeugtyp, zugeordnet wird,
wobei der physikalische Erfassungsvorgang (5) zumindest eine zeitliche Erfassungssequenz umfasst, wobei während der Erfassungssequenz zumindest zwei verschiedene Aufnahmen des Nutzungsobjektes (1) durchgeführt werden, wobei die Erfassungssequenz eine Anleitung an eine Durchführungsvorrichtung und/oder an einen Nutzer vorgibt, das Nutzungsobjekt mindestens unter verschiedenen Winkeln oder verschiedenen Abständen oder mit verschiedenen Farbkontrasten zu fotografieren, um eine Identifikation mit einem in der Datenbank hinterlegten Nutzungsobjekt zu vereinfachen,
wobei zur genaueren Orientierung während der Erfassungssequenz an dem Nutzungsobjekt zumindest ein, vorzugsweise jedoch mehrere Orientierungspunkte vorzugsweise auch lösbar angebracht sein.
wobei Orientierungspunkte Markierungselemente sein können, welche die Kamera der Verarbeitungseinheit besonders einfach aufnimmt und erkennt und welche dem Nutzer einen Erfassungsabstand und/oder einen Erfassungswinkel relativ zum Nutzungsobjekt vorgeben,

wobei bei den Markierungselementen es sich um Bar- oder Strichcodes und/oder um NFC-Chips handelt.

## Claims

1. A method (1000) for the physical detection of at least one usage object (1), i.e. a vehicle (1), comprising the following steps:

- providing the usage object (1),
- providing at least one processing unit (2), by means of which the usage object (1) is detected, as a result of which at least one characteristic value (3) of the usage object (1) is obtained,
- wherein the characteristic value is made up of various characteristic sub-values, so that a usage object:

  - has a characteristic sub-value with regard to an external colour,
  - has a characteristic sub-value in respect of maximum dimensions in height and width and/or depth, and
  - has a further characteristic sub-value of the usage object with respect to weight,
  - so that the characteristic value is formed by the combination of these three characteristic sub-values, and wherein this combination takes place in the form of a sum, and wherein the first characteristic sub-value is represented by a first weighting factor, the second characteristic sub-value is represented by a second weighting factor and the third characteristic sub-value is represented by a third weighting factor according to the formula:

$$K = G1 * K1 + G2 * K2 + G3 * K3,$$

wherein the values K1 to K3 are the respective sub-values and the factors G1 to G3 respectively designate weighting factors of the characteristic sub-values, and wherein a usage object classification is carried out on the basis of the characteristic value comparison, which outputs a corresponding database object which is displayed on a screen (21) of the processing unit (2), so that a camera image of the usage object (1) together with a database object (4) is shown on the screen (21) at least partially optically superimposed, wherein the database object is a corresponding template image of the corresponding usage object deposited in the database and

- wherein after the usage object classification at least one physical detection process (5) is carried out by a user, which comprises photographing the usage object, so that the usage object (1) is detected in such a way that an image of the usage object (1) as detected by the detection process is shown at the same time as the database object (4) shown on the screen (21) in an identical manner or in a manner identical to scale, wherein identical in this context means a closest approximation to a usage object correspondingly deposited in the database is determined on the basis of the characteristic value and/or the optical dimensions of the usage object, so that the usage object which is detected by the processing unit does not correspond in all dimensions and in terms of wear and tear to the usage object identified in the database in correspondence with characteristic value, but the greatest match is produced on the basis of the predefined minimum dimensions, and

  wherein as a result of the detection process, the usage object (1) is associated by the processing unit (2) and/or a CPU with at least one usage object class, in particular a more precise vehicle type, wherein the physical detection process (5) comprises at least one temporal detection sequence, wherein during the detection sequence at least two different photographs of the usage object (1) are performed, wherein the detection sequence provides an instruction to an implementation device and/or to a user to photograph the usage object at least at different angles or different distances or with different color contrasts in order to facilitate an identification with a usage object deposited in the database, wherein for more precise orientation during the detection sequence at least one, but preferably several orientation points are attached to the usage object, preferably also in a detachable manner, wherein orientation points are marking elements which the camera of the processing unit picks up and recognizes particularly easily and which provide the user with a detection distance and/or a detection angle relative to the usage object,

wherein the marking elements are barcodes and/or NFC chips.

2. The method (1000) as claimed in claim 1,
   **characterised in that**
   the physical detection process (5) comprises at least one temporal detection sequence, wherein during the detection sequence, at least two different photographs of the usage object (1) are captured, wherein each image is associated with at least one database object (4).

3. The method (1000) as claimed in claim 2,
   **characterised in that**
   the temporal sequential detection instruction specifies to the user a detection distance and/or a detection angle relative to the usage object (1).

4. The method (1000) as claimed in at least one of the preceding claims,
   **characterised in that**
   the processing unit (2) comprises or is a smart phone, a camera.

5. The method (1000) as claimed in claim 3,
   **characterised in that**
   the processing unit (2) is fixed to a capturing element (23) that moves in correspondence with the specifications provided by the detection sequence relative to the usage object (1).

6. The method (1000) as claimed in claim 5,
   **characterised in that**
   the capturing element (23) is a drone that is steered relative to the usage object (1) in correspondence with the detection sequence, in order to carry out the individual photographs.

7. The method (1000) as claimed in claim 6,
   **characterised in that**
   the detection sequence also comprises control data with regard to the flying altitude of the drone (23), so that the drone (23) flies along the detection sequence in a temporal respect, preferably fully automatically.

8. An apparatus (100) for the physical detection of at least one usage object (1), i.e. a vehicle (1), wherein the apparatus (100) comprises:

   - at least one processing unit (2), by means of which a usage object (1) can be detected, from which at least one characteristic value (3) of the usage object (1) may be obtained,
   - wherein the characteristic value is made up of various characteristic sub-values, so that a usage object:

     - has a characteristic sub-value with regard to an external colour,
     - has a characteristic sub-value in respect of maximum dimensions in height and width and/or depth, and
     - has a further characteristic sub-value of the usage object with respect to weight,
     - so that the characteristic value is formed by the combination of these three characteristic sub-values, and this combination takes place in the form of a sum, and wherein the first characteristic sub-value is represented by a first weighting factor, the second characteristic sub-value is represented by a second weighting factor and the third characteristic sub-value is represented by a third weighting factor according to the formula:

$$K = G1 * K1 + G2 * K2 + G3 * K3,$$

     wherein the values K1 to K3 are the respective sub-values and the factors G1 to G3 respectively designate weighting factors of the characteristic sub-values, and wherein a usage object classification is carried out on the basis of the characteristic value comparison, which outputs a corresponding database object which is displayed on a screen (21) of the processing unit, so that a camera image of the usage object (1) together with the database object (4) can be shown on the screen (21) at least partially optically superimposed, wherein the database object is a corresponding template image of the corresponding usage object deposited in the database and
     - wherein after the usage object classification at least one physical detection process (5) is carried out by a user, which comprises photographing the usage object, so that the usage object (1) is detected in such a way that an image of the usage object (1) as detected by the detection process is shown at the same time as the database object (4) shown on the screen (21) in an identical manner or in a manner identical to scale, wherein identical in this context means a closest approximation to a usage object correspondingly deposited in the database is determined on the basis of the characteristic value and/or the optical dimensions of the usage object, so that the usage object which is detected by the processing unit does not correspond in all dimensions and in terms of wear and tear to the usage object identified in the database in correspondence with characteristic value, but the greatest match is produced on the basis of the predefined minimum dimensions, and

> wherein as a result of the detection process, the usage object (1) is associated with at least a usage object class, in particular a more precise vehicle type, by the processing unit (2) and/or a CPU,
> wherein the physical detection process (5) comprises at least one temporal detection sequence, wherein during the detection sequence at least two different photographs of the usage object (1) are performed,
> wherein the detection sequence provides an instruction to an implementation device and/or to a user to photograph the usage object at least at different angles or different distances or with different color contrasts in order to facilitate an identification with a usage object deposited in the database,
> wherein for more precise orientation during the detection sequence at least one, but preferably several orientation points are attached to the usage object, preferably also in a detachable manner,
> wherein orientation points are marking elements which the camera of the processing unit picks up and recognizes particularly easily and which provide the user with a detection distance and/or a detection angle relative to the usage object,
> wherein the marking elements are barcodes and/or NFC chips.

## Revendications

1. Procédé (1000) de détection physique d'au moins un objet utile (1), donc d'un véhicule (1), comprenant les étapes suivantes :

   - de fourniture de l'objet utile (1),
   - de fourniture d'au moins une unité de traitement (2), au moyen de laquelle l'objet utile (1) est détecté, au moins une valeur caractéristique (3) de l'objet utile (1) étant obtenue sur cette base,
   - dans lequel la valeur caractéristique se compose de différentes valeurs caractéristiques partielles si bien qu'ici un objet utile :

     - présente en termes d'une couleur extérieure une valeur caractéristique partielle,
     - présente en termes de dimensions maximales en hauteur et largeur et/ou profondeur une valeur caractéristique partielle, et
     - présente en termes du poids une autre valeur caractéristique partielle de l'objet utile
     - si bien que la valeur caractéristique est formée par la combinaison desdites trois valeurs caractéristiques partielles et cette combinaison a lieu sous la forme d'une somme, et dans lequel la première valeur caractéristique partielle est représentée avec un premier facteur de pondération, la deuxième valeur caractéristique partielle est représentée avec un deuxième facteur de pondération et la troisième valeur caractéristique partielle est représentée avec un troisième facteur de pondération selon la formule :

     $$K = G1 * K1 + G2 * K2 + G3 * K3,$$

     dans lequel les valeurs K1 à K3 sont les valeurs partielles respectives et les facteurs G1 à G3 désignent respectivement des facteurs de pondération des valeurs caractéristiques partielles, et
     dans lequel une classification d'objet utile est mise en œuvre à l'aide de la comparaison de valeurs caractéristiques, laquelle délivre un objet de base de données correspondant, lequel est représenté sur un écran (21) de l'unité de traitement (2), si bien qu'une image de caméra de l'objet utile (1) est superposée conjointement à l'objet de base de données (4) en moins en partie de manière optique sur l'écran (21), dans lequel l'objet de données est une image modèle, enregistrée de manière correspondante dans la base de données, de l'objet utile correspondant, et

- dans lequel au moins une opération de détection physique (5) est effectuée par un utilisateur d'après la classification d'objet utile, laquelle comprend la prise de photographies de l'objet utile si bien que l'objet utile (1) est détecté de telle manière qu'une reproduction, détectée par l'opération de détection, de l'objet utile (1) est représentée dans le même temps de manière identique ou de manière identique selon une mise à l'échelle à l'objet de base de données (4) représenté sur l'écran (21), dans lequel identique signifie dans ce contexte qu'une approximation la plus importante à un objet utile enregistré de manière correspondante dans la base de données est déterminée à l'aide de la valeur caractéristique et/ou des mesures optiques de l'objet utile si bien que l'objet utile, lequel est détecté par l'unité de traitement, ne correspond pas dans toutes les mesures et utilisations, à l'objet utile identifié dans la base de données conformément à la valeur caractéristique, toutefois la plus grande concordance est établie à l'aide de mesures minimales préfixées, et

dans lequel l'objet utile (1) est associé grâce à l'opération de détection par l'unité de traitement (2) et/ou une CPU à au moins une classe d'objets utiles, en particulier à un type de véhicule plus précis, dans lequel l'opération de détection physique (5) comprend au moins une séquence de détection temporelle, dans lequel au moins deux prises différentes de l'objet utile (1) sont mises en œuvre pendant la séquence de détection, dans lequel la séquence de détection spécifie une notice d'utilisation à un dispositif de mise en œuvre et/ou à un utilisateur pour prendre des photographies de l'objet utile au moins selon différents angles ou à des espacements différents avec différents contrastes de couleur pour simplifier une identification avec un objet utile enregistré dans la base de données, dans lequel au moins un, de préférence toutefois plusieurs points d'orientation sont placés de préférence également de manière amovible pour l'orientation plus précise au cours de la séquence d'identification sur l'objet utile, dans lequel des points d'orientation sont des éléments de marquage, que la caméra de l'unité de traitement prend et identifie particulièrement aisément et qui spécifient à l'utilisateur un espacement de détection et/ou un angle de détection par rapport à l'objet utile, dans lequel les éléments de marquage sont des codes à barres et/ou des puces NFC.

2. Procédé (1000) selon la revendication 1,
   **caractérisé en ce que**
   l'opération de détection physique (5) comprend au moins une séquence de détection temporelle, dans lequel au cours de la séquence de détection, au moins deux prises différentes de l'objet utile (1) sont mises en oeuvre, dans lequel au moins un objet de base de données (4) est associé à chaque prise.

3. Procédé (1000) selon la revendication 2,
   **caractérisé en ce que**
   la notice de détection séquentielle dans le temps spécifie à l'utilisateur un espacement de détection et/ou un angle de détection par rapport à l'objet utile (1).

4. Procédé (1000) selon au moins l'une quelconque des revendications précédentes,
   **caractérisé en ce**
   **que** l'unité de traitement (2) comprend ou est un téléphone intelligent, une caméra.

5. Procédé (1000) selon la revendication 3,
   **caractérisé en ce**
   **que** l'unité de traitement (2) est fixée sur un élément de prise (23), lequel se déplace conformément aux spécifications à travers la séquence de détection par rapport à l'objet utile (1).

6. Procédé (1000) selon la revendication 5,
   **caractérisé en ce que**
   l'élément de prise (23) est un drone, lequel est dirigé par rapport à l'objet utile (1) conformément à la séquence de détection pour mettre en œuvre les diverses prises.

7. Procédé (1000) selon la revendication 6,
   **caractérisé en ce que**
   la séquence de détection comprend de la même manière des données de commande concernant l'altitude de vol du drone (23) si bien que le drone (23) survole la séquence de détection du point de vue du temps, de préférence de manière pleinement automatique.

**8.** Dispositif (100) pour la détection physique d'au moins un objet utile (1), donc d'un véhicule (1), dans lequel le dispositif (1000) présente :

- au moins une unité de traitement (2), au moyen de laquelle un objet utile peut être détecté, sur la base duquel au moins une valeur caractéristique (3) de l'objet utile (1) peut être obtenue,
- dans lequel la valeur caractéristique se compose de différentes valeurs caractéristiques partielles si bien qu'ici un objet utile :
- présente quant à une couleur extérieure une valeur caractéristique partielle,
- présente quant à des dimensions maximales en hauteur et largeur et/ou profondeur une valeur caractéristique partielle, et
- présente quant au poids une autre valeur caractéristique partielle de l'objet utile,
- si bien que la valeur caractéristique est formée par la combinaison desdites trois valeurs caractéristiques, et cette combinaison a lieu sous la forme d'une somme, et dans lequel

la première valeur caractéristique partielle est représentée avec un premier facteur de pondération, la deuxième valeur caractéristique partielle est représentée avec un deuxième facteur de pondération, et la troisième valeur caractéristique partielle est représentée avec un troisième facteur de pondération selon la formule :

$$K = G1 * K1 + G2 * K2,$$

dans lequel les valeurs K1 à K2 sont les valeurs partielles respectives et les facteurs G1 à G2 désignent respectivement des facteurs de pondération des valeurs caractéristiques partielles,
dans lequel est mise en œuvre à l'aide de la comparaison des valeurs caractéristiques une classification d'objet utile, laquelle délivre un objet de base de données correspondant, lequel est représenté sur un écran (21) de l'unité de traitement (2) si bien qu'une image de caméra de l'objet utile (1) est superposée conjointement à l'objet de base de données (4) au moins en partie de manière optique sur l'écran (21), dans lequel l'objet de base de données est une image modèle enregistrée de manière correspondante dans la base de données de l'objet utile correspondant,
et

- dans lequel d'après la classification d'objet utile, au moins une opération de détection physique (5) est effectuée par un utilisateur, laquelle comprend la prise de photographies de l'objet utile si bien que l'objet utile (1) est détecté de telle manière qu'une reproduction, détectée par l'opération de détection, de l'objet utile (1) est représentée simultanément de manière identique ou de manière identique selon une mise à l'échelle à l'objet de base de données (4) représenté sur l'écran (21), dans lequel identique signifie dans ce contexte qu'une approximation la plus importante à un objet utile enregistré de manière correspondante dans la base de données est déterminée à l'aide de la valeur caractéristique et/ou des mesures optiques de l'objet utile si bien que l'objet utile, lequel est détecté par l'unité de traitement, ne correspond pas dans toutes les mesures et utilisations, à l'objet utile identifié dans la base de données conformément à la valeur caractéristique, toutefois la plus grande concordance est établie à l'aide de mesures minimales préfixées, et

dans lequel l'objet utile (1) est associé grâce à l'opération de détection par l'unité de traitement (2) et/ou une CPU à au moins une classe d'objets utiles, en particulier à un type de véhicule plus précis,
dans lequel l'opération de détection physique (5) comprend au moins une séquence de détection temporelle, dans lequel au moins deux prises différentes de l'objet utile (1) sont mises en œuvre pendant la séquence de détection, dans lequel la séquence de détection spécifie une notice d'utilisation à un dispositif de mise en œuvre et/ou à un utilisateur pour prendre des photographies de l'objet utile au moins selon différents angles ou à des espacements différents avec différents contrastes de couleur pour simplifier une identification avec un objet utile enregistré dans la base de données,
dans lequel au moins un, de préférence toutefois plusieurs points d'orientation sont placés de préférence également de manière amovible pour l'orientation plus précise au cours de la séquence d'identification sur l'objet utile, dans lequel des points d'orientation peuvent être des éléments de marquage, que la caméra de l'unité de traitement prend et identifie particulièrement aisément et qui spécifient à l'utilisateur un espacement de détection et/ou un angle de détection par rapport à l'objet utile, dans lequel les éléments de marquage sont des codes à barres et/ou des puces NFC.

# Fig. 1

100

1000

23

2,21

4

2

1

3

5

# Fig. 2A

B2  40  21

2

B1  41

## Fig. 2B

## Fig. 2C

# Fig. 3A

# Fig. 3B

EP 3 726 425 B1

Fig. 3C

60

60

1

Fig. 3D

23

1

1

2

21

Fig. 3E

**IN DER BESCHREIBUNG AUFGEFÜHRTE DOKUMENTE**

**In der Beschreibung aufgeführte Patentdokumente**

- CN 108665373 A
- US 2018025392 A1

**In der Beschreibung aufgeführte Nicht-Patentliteratur**

- **ALMADHOUN RANDA et al.** *IEEE/RSJ International Conference on Intelligent Robots and Systems (IROS),* 2018